# EUROPEAN PATENT APPLICATION

(11) **EP 4 566 742 A1**
(43) Date of publication of application: **11.06.2025**
(21) Application number: 23849893.5
(22) Date of filing: 19.07.2023
(51) Int. Cl.: B23B 31/00, B23B 31/10, B23Q 17/00

(54) **MACHINE TOOL, CHUCK GRIPPING FORCE DETECTION METHOD, AND CHUCK FASTENING AMOUNT SETTING METHOD**

(30) Priority: 01.08.2022 JP 2022122732
(71) Applicant: Citizen Watch Co., Ltd., Nishitokyo-shi, Tokyo 188-8511 (JP); Citizen Machinery Co., Ltd., Nagano 389-0206 (JP)
(72) Inventor: SUZUKI, Toshiyuki, Kitasaku-gun, Nagano 389-0206 (JP)
(74) Representative: Ribeiro, James Michael
(86) International application number: PCT/JP2023/026458
(87) International publication number: WO 2024/029338

(57) **Abstract**

Provided is technology which enables suitable control of a chuck gripping force. In this machine tool comprising a main shaft provided with a chuck for gripping a workpiece, when an open/close mechanism has performed a closing operation on the chuck such that the chuck enters a closed state from an open state, a gripping force of the chuck on the workpiece in the closed state is acquired on the basis of the magnitude of a difference between a first time taken from when a control unit emits a control signal for the closing operation to the open/close mechanism to when a sensor detects that the chuck is no longer in the open state, and a second time taken from when the control unit emits a control signal in an open/close period to when the sensor detects that the chuck has entered the closed state.

## Description

### [Technical Field]

The present invention relates to a method for detecting the holding force of a chuck in a machine tool.

### [Background Art]

In a machine tool, a workpiece is machined by rotating a spindle that holds the workpiece and by moving back and forth a machining tool relative to the rotating workpiece. A chuck (jaws) properly holding the workpiece is a key element in determining machining precision. PTL 1 discloses a method for controlling the holding force of a chuck by controlling the rotation angle of the spindle motor, based on a predetermined relationship between an amount of tightening corresponding to the rotation of the spindle motor after the chuck has contacted the workpiece until a preset holding force is generated, and the holding force of the chuck.

### [Citation List]

### [Patent Literature]

[PTL 1]
Japanese Patent Application Publication No. 2001-096409

### [Summary of Invention]

### [Technical Problem]

The holding force of a chuck is not easy to measure directly, and the common approach is to determine the force from an amount of control of the mechanism that causes the chuck to operate, as described above. However, the relationship between a control amount and the holding force is not necessarily consistent in many cases due to various factors such as ongoing chuck wear and changes in lubrication conditions.

An object of the present invention is to provide a technique that enables correct control of the holding force of a chuck.

### [Solution to Problem]

To achieve the above object, a machine tool according to the present invention includes:
a spindle including a chuck configured to hold a workpiece;
an open/close mechanism configured to operate the chuck to assume either a closed state in which the chuck holds the workpiece or an open state in which the chuck allows the workpiece to be removed;
a sensor configured to detect whether or not the chuck is in the closed state, and whether or not the chuck is in the open state, respectively; and
a control unit configured to control the open/close mechanism;
wherein the machine tool includes an acquisition means configured to acquire a holding force applied to the workpiece by the chuck in the closed state based on a difference between a first time and a second time, the first time being, in a case where the open/close mechanism causes the chuck to perform a closing operation from the open state to the closed state, a time from when the control unit issues a control signal to the open/close mechanism to perform the closing operation to when the sensor detects that the chuck is no longer in the open state, and the second time being a time from when the control unit issues the control signal to the open/close period to when the sensor detects that the chuck has assumed the closed state.

To achieve the above object, a chuck holding force detection method according to the present invention is
a method for detecting a holding force applied to a workpiece by a chuck in a spindle of a machine tool in a case where the chuck holds the workpiece, including:
a first step in which an open/close mechanism causes the chuck to perform a closing operation, from an open state in which the chuck allows a workpiece to be removed to a closed state in which the chuck holds a workpiece;
a second step in which a first time and a second time are acquired, the first time being a time from when a control unit issues a control signal to the open/close mechanism for the closing operation in the first step to when a sensor detects that the chuck is no longer in the open state, and the second time being a time from when the control unit issues the control signal to the open/close mechanism to when the sensor detects that the chuck has assumed the closed state; and
a third step in which the holding force is obtained on the basis of a correlation between a difference between the first time and the second time, a tightening amount adjusted by an adjustment mechanism applied to the workpiece by the chuck in the closed state, and the holding force.

To achieve the above object, a chuck tightening amount setting method according to the present invention is
a method for setting a tightening amount applied to a workpiece by a chuck in a spindle of a machine tool in a case where the chuck holds the workpiece, including:
a first step in which, with the chuck in a closed state in which the chuck holds a workpiece, and with a tightening amount applied to the workpiece by the chuck in the closed state being adjusted by an adjustment mechanism to a first tightening amount, an open/close mechanism causes the chuck to perform a closing operation, from an open state in which the chuck allows a workpiece to be removed to the closed state,
a second step in which a first time and a second time are acquired, the first time being a time from when a control unit issues a control signal to the open/close mechanism for the closing operation in the first step to when a sensor detects that the chuck is no longer in the open state, and the second time being a time from when the control unit issues the control signal to the open/close mechanism to when the sensor detects that the chuck has assumed the closed state;
a third step in which a second tightening amount that enables the holding force to be set to a desired value is obtained on the basis of a correlation between a difference between the first time and the second time, a tightening amount adjusted by the adjustment mechanism applied to the workpiece by the chuck in the closed state, and a holding force applied to the workpiece by the chuck in the closed state; and
a fourth step in which the tightening amount is adjusted by the adjustment mechanism to the second tightening amount obtained in the third step.

### [Advantageous Effects of Invention]

The present invention enables correct control of the holding force of a chuck.

### [Brief Description of Drawings]

[Fig. 1]

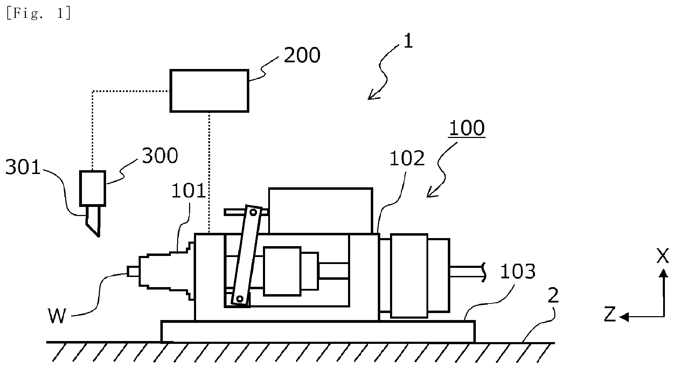

   Fig. 1 is a schematic diagram of a machine tool including a workpiece collecting device according to an embodiment of the present invention.
[Fig. 2]

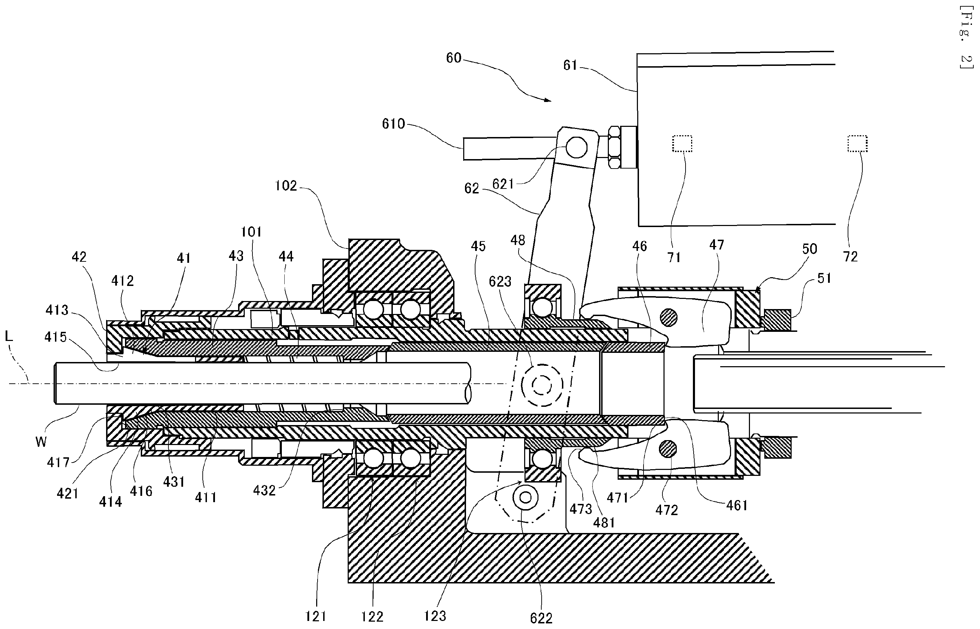

   Fig. 2 is a schematic cross-sectional view of the basic configuration around a spindle.
[Fig. 3]

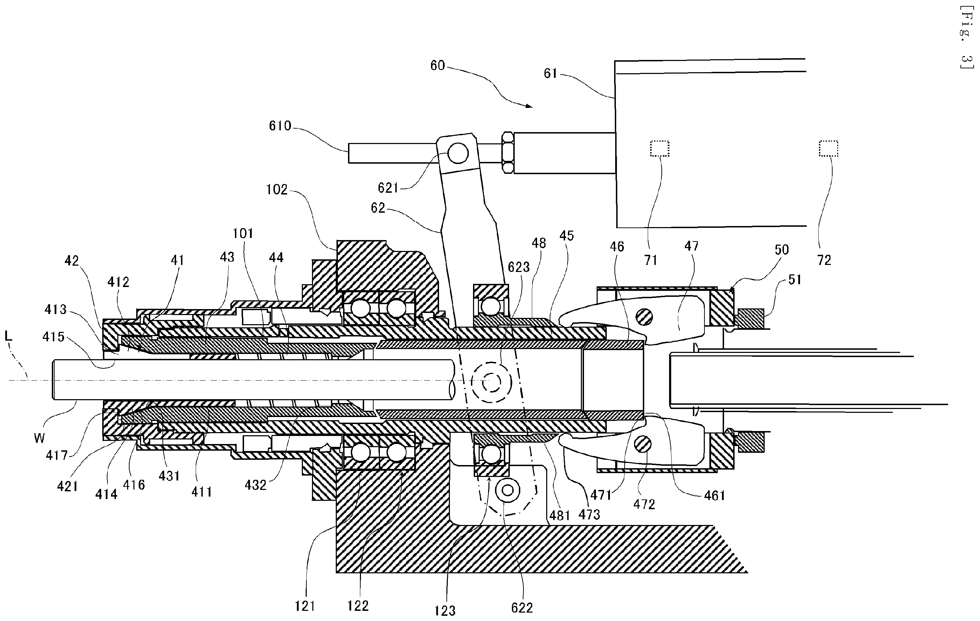

   Fig. 3 is a schematic cross-sectional view of the basic configuration around the spindle.
[Fig. 4]

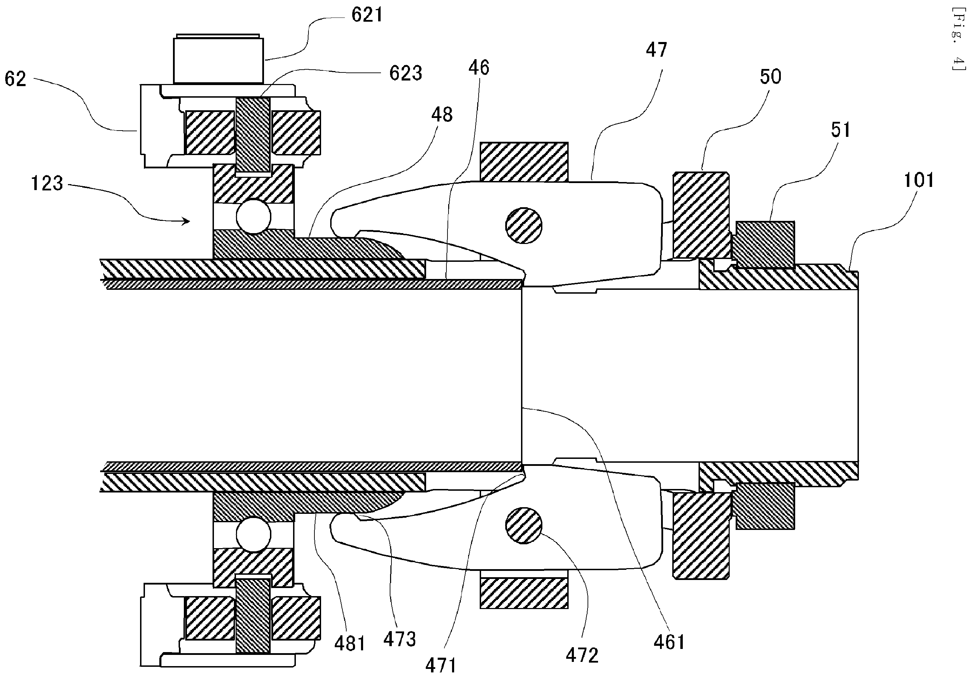

   Fig. 4 is a schematic cross-sectional view of the configuration around chuck claws, a bobbin, and a chuck holder.
[Fig. 5]

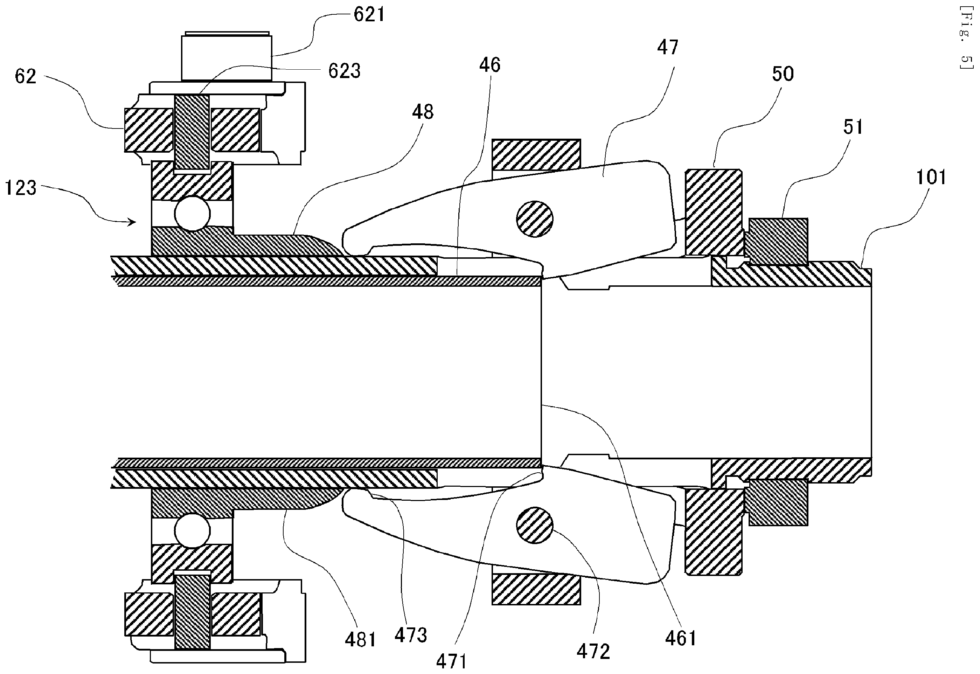

   Fig. 5 is a schematic cross-sectional view of the configuration around the chuck claws, the bobbin, and the chuck holder.
[Fig. 6]

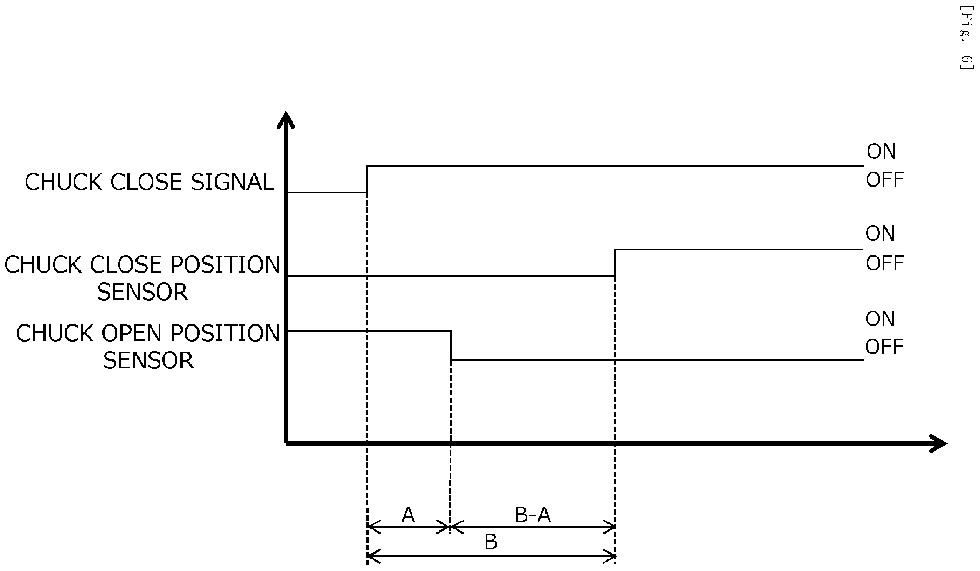

   Fig. 6 is a timing chart of a chuck close signal and sensor response times.
[Fig. 7]

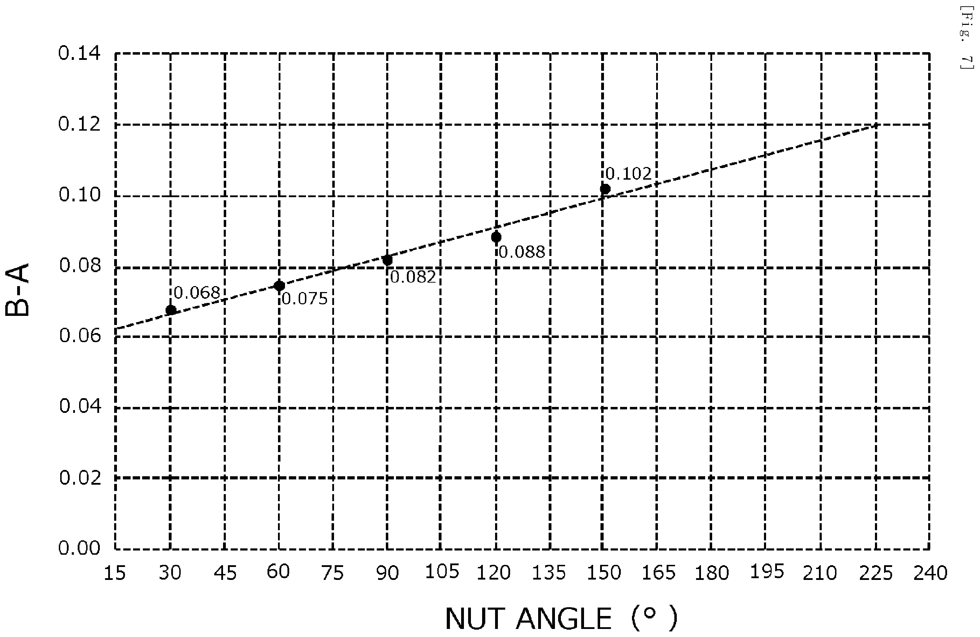

   Fig. 7 is a graph showing a relationship between the amount of tightening (nut angle) of an adjustment nut and period B - A.
[Fig. 8]

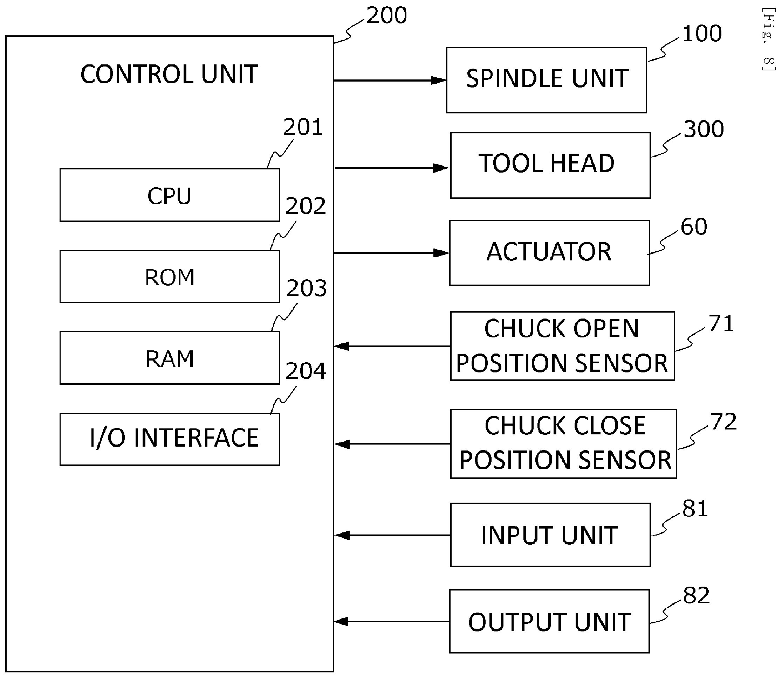

   Fig. 8 is a schematic block diagram illustrating one example of the configuration of the machine tool according to this embodiment.
[Fig. 9]

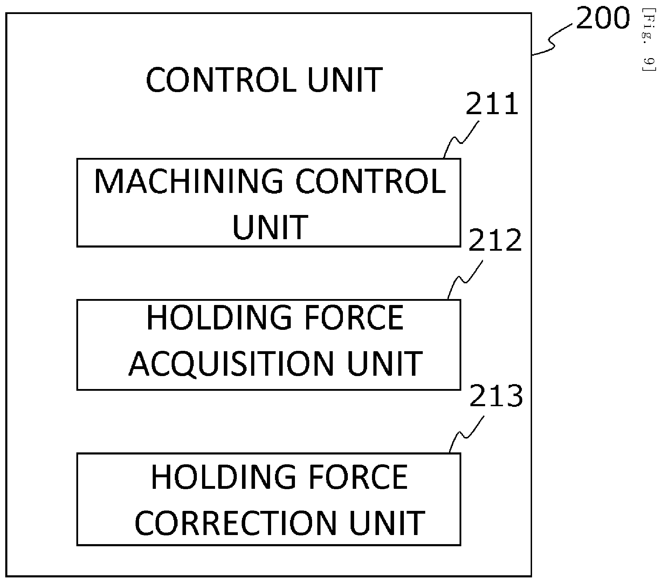

   Fig. 9 is a diagram illustrating one example of the functional configuration of a control unit.
[Fig. 10]

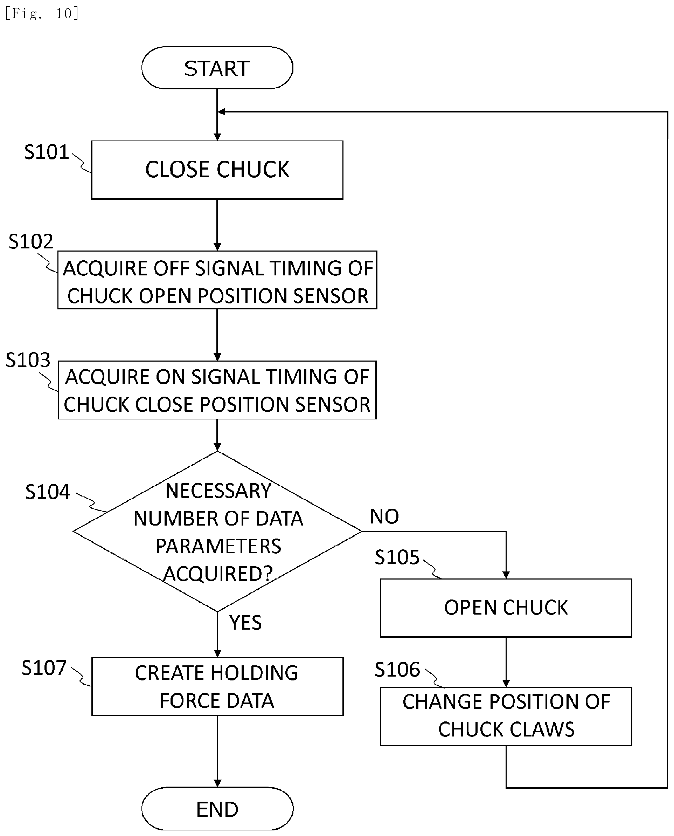

   Fig. 10 is a flowchart for creating holding force correlation data.
[Fig. 11]

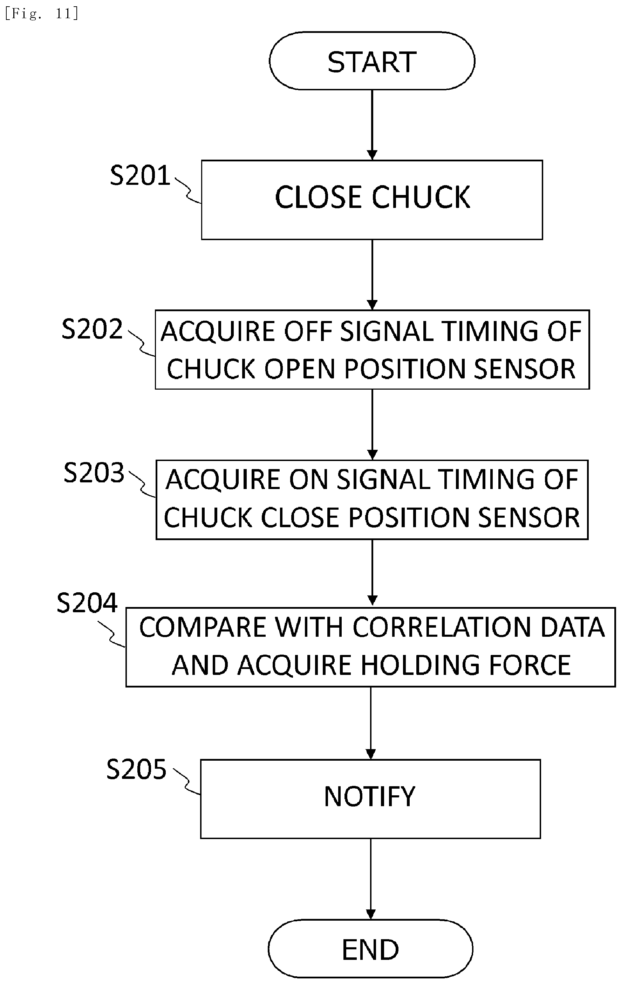

   Fig. 11 is a flowchart for detecting a holding force.
[Fig. 12]

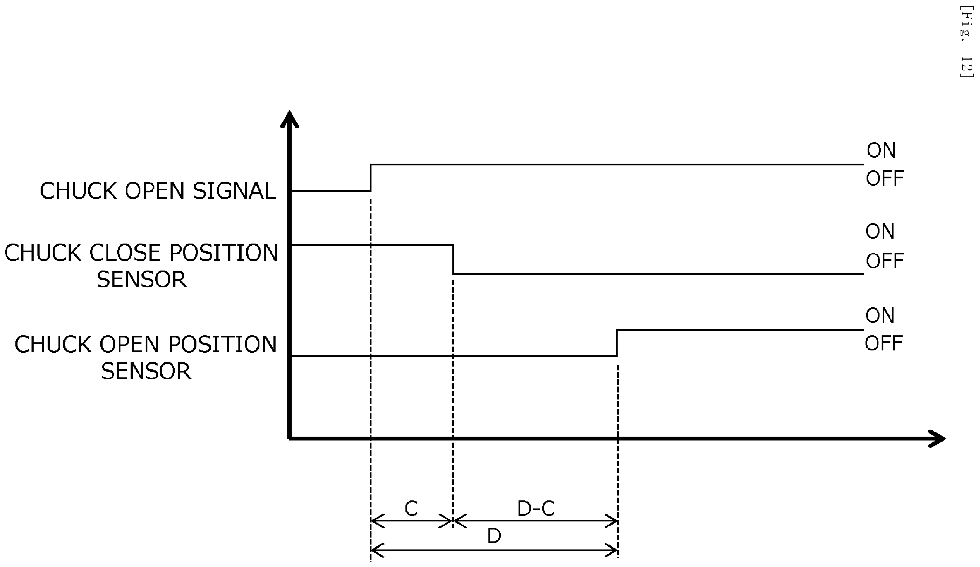

   Fig. 12 is a timing chart of a chuck open signal and sensor response times.
[Fig. 13]

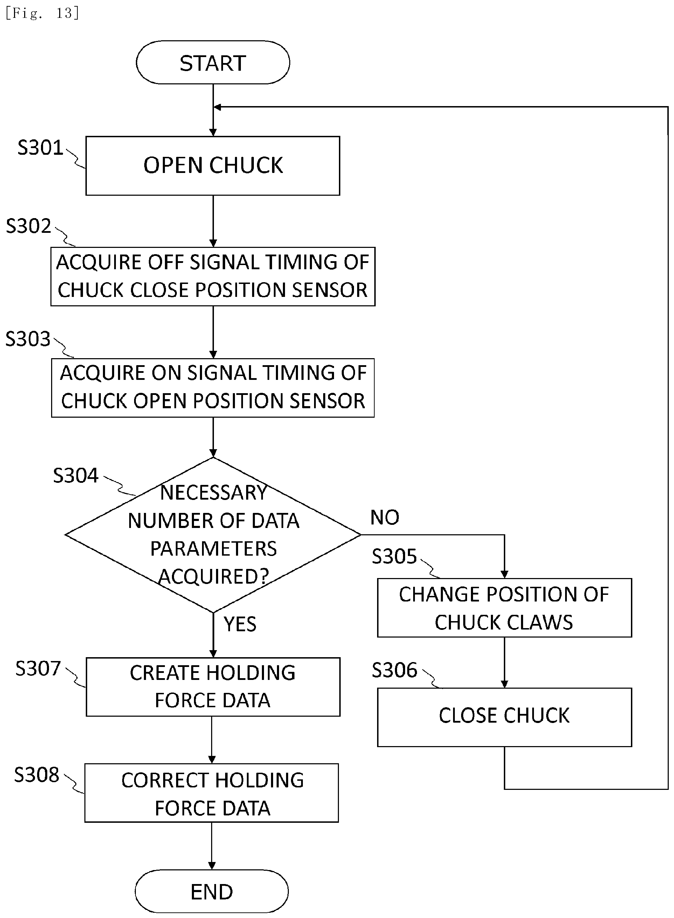

   Fig. 13 is a flowchart for correcting the holding force.

### [Description of Embodiment]

Preferred embodiments of the present invention will be described below with reference to the drawings. Note, the embodiments described below merely illustrate preferred configurations of the present invention and are not intended to limit the scope of the present invention to these configurations. Unless otherwise particularly specified, the hardware and software configurations of various devices, production conditions, and the sizes, materials, shapes, and relative arrangement of constituent components in the following description are not intended to limit the scope of the present invention to these examples. The same constituent elements are basically given the same reference numerals to omit repeated description thereof.

### (Examples)

Fig. 1 is a schematic diagram illustrating the configuration of a machine tool 1 according to one embodiment of the present invention. The machine tool 1 shown in Fig. 1 is a type known as an automatic lathe that performs a cutting (turning) operation on a workpiece W to be machined, which is a long rod member, for example, by rotating the workpiece and bringing a cutting tool (machining tool) into contact with the workpiece.

The machine tool 1 generally includes a spindle unit 100 set on a base 2, and a tool head 300. The spindle unit 100 includes a spindle 101. The direction of the rotation axis of the spindle 101 shall be referred to as Z-axis direction. Of the directions perpendicular to the axial direction, the direction parallel to the vertical direction shall be referred to as X-axis direction, and the direction parallel to the horizontal direction shall be referred to as Y-axis direction. Fig. 1 is a schematic diagram of the configuration of the machine tool 1 viewed in the Y-axis direction.

The spindle unit 100 includes a headstock 102 that rotatably supports the spindle 101, and a drive unit 103 for moving the headstock 102 in the Z-axis direction on the base 2. A ball screw drive system, for example, made up of a motor as the drive power source, a ball screw, guide rails, etc., can be employed as the drive unit. The spindle unit 100 may include a drive unit that moves the headstock 102 not only in the Z-axis direction but also in the Y-axis or X-axis direction. The headstock 102 includes a built-in motor (not shown), for example, and is configured to rotate the spindle 101 by the rotary driving force of the motor.

The spindle 101 has a hollow structure with a workpiece holding hole for holding or clamping a workpiece W. The spindle includes a chuck, a chuck sleeve, a guide bush, and so on for clamping a workpiece W (with matching axial centers and such as to restrict axial movement). The workpiece W is inserted from the opening at the rear end of the workpiece holding hole in the spindle, fed in the axial direction through the workpiece holding hole, and clamped by the chuck in a predetermined inserted position. A portion of the workpiece W protruding from the opening at the distal end of the workpiece holding hole in the spindle is subjected to a turning operation performed by a cutting tool 301 held on the tool head 300. The guide bush mentioned above (not shown) is provided at the distal end opening of the workpiece holding hole in the spindle, for example, and keeps the orientation of the workpiece W near the opening of the workpiece holding hole. The structure for supporting the workpiece W using the guide bush may be configured separately from the spindle unit 100.

The chuck and the chuck sleeve, which are not shown in Fig. 1, are configured to join axially via a tapered surface. As will be described in more detail later, the chuck sleeve is joined from behind to the chuck, which is restrained from axial movement. The chuck sleeve is moved in the axial direction by receiving a force applied from an air cylinder that is not shown in Fig. 1, causing a component of force toward the axial center to be applied to the chuck. This force contracts the chuck and causes the slits of the chuck to close. The chuck clamps the workpiece W in this way.

The tool head 300 includes a plurality of cutting tools 301 that are prepared to be selected according to the intended type of machining. The tool head 300 is configured to advance and retract in the X-axis direction relative to the workpiece W by a drive system that is not shown. A desired cutting (turning) operation is carried out to the workpiece W by bringing a selected cutting tool 301 into contact with the workpiece W.

The machine tool 1 includes a control unit 200 configured by a computer including a processor such as a CPU (Central Processing Unit) and a memory. The control unit 200 controls various operations of various units making up the machine tool 1, including the spindle unit 100, the tool head 300, a workpiece feeder (not shown), an actuator 60 to be described later, a display unit 70, and so on.

Fig. 2 and Fig. 3 are schematic cross-sectional views each illustrating the basic configuration around the spindle 101 to a greater scale. Fig. 2 shows the configuration of various parts in a state where a collet chuck 41 is closed, i.e., when a workpiece W is clamped. Fig. 3 shows the configuration of various parts in a state where the collet chuck 41 is opened, i.e., when the workpiece W is attachable to and removable from the spindle 101. Fig. 4 and Fig. 5 are schematic cross-sectional views each illustrating the configuration around chuck claws 47, a bobbin 48, and a chuck holder 50 to a greater scale. Fig. 4 shows the configuration of various parts in a state where the chuck claws 47 are in a closed orientation, i.e., when the collet chuck 41 is in a closed state and clamping the workpiece W. Fig. 5 shows the configuration of various parts in a state where the chuck claws 47 are opened, i.e., when the workpiece W is attachable to and removable from the collet chuck 41.

As shown in Fig. 2 and Fig. 3, the spindle 101 is assembled to the headstock 102 such as to be rotatable via bearing assemblies 121, 122, and 123. The collet chuck 41 is attached to the distal end in the axial direction of the spindle 101. The collet chuck 41 includes a hollow tubular body 411 that can receive the workpiece W inside, and a clamping portion 412 provided at the distal end in the direction of the center axis line L (longitudinal direction) of the tubular body 411.

The clamping portion 412 has a so-called slit structure, which allows it to elastically change its inside diameter about the center axis line L1. Namely, the clamping portion 412 is formed with slits 413 extending a predetermined length in the axial direction from an end face at the distal end toward the rear end. The slits 413 are formed by cutting off the clamping portion 412 at plural locations radially around the center axis line L and circumferentially at equal intervals, for example, around the center axis line L. Between these plural slits 413 are formed strips 414 that are capable of displacing radially about the center axis line L1. The strips 414 are each configured as a plate spring that can elastically deform in the radial direction with their base ends as the support point.

The strips 414 each have a concavely curved inner surface facing toward the center axis line L1, and together form a substantially cylindrical workpiece clamping surface 415 in the clamping portion 412. The outer surface of each strip 414 includes an inclined surface tilted relative to the axial direction. These inclined surfaces together form a tapered force receiving surface 416 that gradually increases in diameter towards the distal end in the axial direction. A shoulder surface 417 extending perpendicularly to the center axis line L1 is formed at the more distal end in the axial direction than the force receiving surface 416 formed by the strips 414.

The plurality of strips 414 each deflects elastically when an external radially inward force is applied via the force receiving surface 416, causing the workpiece clamping surface 415 to reduce in diameter until the surface makes tight contact with the workpiece W, thus firmly and securely holding the workpiece W. When the radial pressure on the clamping portion 412 is removed, the strips 414 each resiliently rebound, thereby increasing the diameter of the workpiece clamping surface 415 so that the workpiece W is released from the clamping portion 412.

A cap nut 42 is attached to the distal end of the workpiece holding hole of the spindle 101. The cap nut 42 includes a locking surface 421, which is an end face oriented toward the rear end in the axial direction, making contact with the shoulder surface 417 of the collet chuck 41 in the axial direction. The chuck sleeve 43, as a second actuating member, is assembled in the workpiece holding hole of the spindle 101 such as to hold the collet chuck 41 between itself and the cap nut 42.

The chuck sleeve 43 is a hollow tubular member that can receive therein the workpiece W and the collet chuck 41 that surrounds the workpiece. The inner surface of the chuck sleeve 43 includes a force imparting surface 431 that acts on the force receiving surface 416 of the collet chuck 41. A compression coil spring 44 is assembled in the chuck sleeve 43 as a resilient member that imparts an axial biasing force to the collet chuck 41. The chuck sleeve 43 has a spring receiving surface 432, so that the compression coil spring 44 is axially compressed between the spring receiving surface 432 and the axial rear end face of the collet chuck 41. This biasing force of the compression coil spring 44 brings the shoulder surface 417 of the collet chuck 41 into contact with the locking surface 421, and presses the collet chuck 41 axially against the cap nut 42.

The force imparting surface 431 is a tapered surface that gradually increases in diameter towards the axial distal end and that faces and makes contact with the force receiving surface 416 both in the axial direction along the center axis line L1 and the radial direction about the center axis line L1. The force imparting surface 431 imparting a radially inward actuating force to the force receiving surface 416 causes the clamping portion 412 of the collet chuck 41 to perform the operation of holding the workpiece W as described above.

Inside of the workpiece holding hole of the spindle 101, a chuck opening/closing sleeve 45 and a balancing sleeve 46, each of which is a hollow tubular member capable of receiving the workpiece W inside, are mounted at the axial rear end of the chuck sleeve 43. The chuck sleeve 43 and these chuck opening/closing sleeve 45 and balancing sleeve 46 are serially aligned in the axial direction in this order and axially engaged. These sleeves are configured to be integrally displaceable in the axial direction as the second actuating member. The balancing sleeve 46 has an actuated surface 461 at the axial rear end for receiving an actuating force.

The spindle 101 is provided with chuck claws 47 as a first actuating member for imparting an actuating force to the actuated surface 461 of the balancing sleeve 46. The chuck claws 47 are provided in plurality, at equal intervals around the center axis line L1, for example. Each chuck claw 47 has an actuating portion 471 that makes contact with the actuated surface 461 in the axial direction. Each chuck claw is rotatable relative to the spindle 101 about a rotary shaft 472 along a tangential line of an imaginary circle about the center axis line L1. The chuck holder 50 collectively supports the plurality of chuck claws 47, i.e., the chuck claws are assembled to the spindle 101 via the chuck holder 50.

The chuck claws 47 rotate to be able to assume a closed orientation with the actuating portions 471 advanced axially forward and an open orientation with the actuating portions 471 retracted axially rearward. The chuck claws 47 include an actuated portion 473 that receives the driving force for changing the orientations as described above. The spindle 101 is provided with the bobbin 48, which is mounted on a cylindrical wall of the spindle 101 such as to be axially displaceable, as a linear actuator that imparts a driving force to the actuated portion 473. More specifically, the bobbin 48 is configured as a part of the bearing assembly 123 that is axially displaceable relative to the spindle 101. The bearing assembly 123 is axially shifted relative to the spindle 101 by a driving force from the actuator 60 as a driving means. The bobbin 48 is configured to be movable by an axial displacement of the bearing assembly 123 between an actuating position where it causes the chuck claws 47 to assume the closed orientation and an actuated position where it causes the chuck claws 47 to assume the open orientation.

The bobbin 48 includes an actuating portion 481 that is a substantially conical outer circumferential surface gradually reducing in diameter towards the axial rear end. When the bobbin 48 is in the actuating position, the chuck claws 47 are on the bobbin 48 with the actuated portions 473 being in contact with the actuating portion 481. The chuck claws 47 rotate as they slide onto the bobbin 48 and assume the closed orientation. When the bobbin 48 is in the actuated position, the actuated portions 473 are away from the actuating portion 481 and in contact with an outer circumferential surface of the spindle 101, i.e., the chuck claws 47 are not in contact with the bobbin 48. The chuck claws 47 rotate as they come down from the bobbin 48 and assume the open orientation.

The actuator 60 includes an air cylinder 61, and an arm 62 that connects a rod 610 of the air cylinder 61 and the bearing assembly 123. The arm 62 is mounted to the headstock 102 such as to be rotatable about a rotary shaft 622, is rotatably connected to the rod 610 via a rotary shaft 621, and is rotatably connected to the bearing assembly 123 via a rotary shaft 623. The rod 610 of the air cylinder 61 reciprocates in the directions along the center axis line L, and the arm 62 rotates about the rotary shaft 622 as the rod 610 reciprocates. For example, the rotary shaft 623 that connects the bearing assembly 123 and the arm 62 is configured to be displaceable in the longitudinal direction of the arm 62, so that the rotary shaft shifts in the direction along the center axis line L while also shifting in the longitudinal direction of the arm as the arm 62 rotates. Thus the bearing assembly 123 axially shifts on the spindle 101 to cause a change in the axial relative position of the bobbin 48 to the chuck claws 47.

As the chuck claws 47 transition from the open orientation to the closed orientation, the actuating portions 471 push the actuated surface 461 axially forward, causing the balancing sleeve 46, the chuck opening/closing sleeve 45, and the chuck sleeve 43 to be pushed axially forward sequentially. Thus, a radially inward force is applied from the force imparting surface 431 of the chuck sleeve 43 to the force receiving surface 416 of the collet chuck 41, causing an increase in the holding force of the collet chuck 41 on the workpiece W, and bringing the collet chuck into the closed state in which it firmly and securely clamps the workpiece W.

As the chuck claws 47 transition from the closed orientation to the open orientation, the actuating portions 471 axially move back, allowing the chuck sleeve 43, the chuck opening/closing sleeve 45, and the balancing sleeve 46 to be pushed axially backward sequentially by the biasing force of the compression coil spring 44. Thus, the radially inward force from the force imparting surface 431 of the chuck sleeve 43 to the force receiving surface 416 of the collet chuck 41 is removed, causing a decrease in the holding force of the collet chuck 41 on the workpiece W, and bringing the collet chuck 41 into the open state in which it allows the workpiece W to be removed.

The air cylinder 61 is provided with a chuck open position sensor 71 and a chuck close position sensor 72. The chuck open position sensor 71 is configured to respond when the rod 610 strokes to a contracted position (Fig. 2) where it has moved the bobbin 48 to the activating position. The chuck close position sensor 72 is configured to respond when the rod 610 strokes to an extended position (Fig. 3) where it has moved the bobbin 48 to the non-activating position. The sensors 71 and 72 may be optical sensors, for example, detecting markings on the rod 610. Any other conventional or known sensors can be used as desired.

An adjustment nut 51 is screwed on a cylindrical wall of the spindle 101 at the axial rear end of the chuck holder 50, as shown in Fig. 4 and Fig. 5. The chuck holder 50 is axially slidable on the outer circumferential surface of the spindle 101 by a guide mechanism (not shown) provided on the tubular wall of the spindle 101. The adjustment nut 51 axially abuts on the chuck holder 50, resisting the load of the biasing force of the compression coil spring 44 applied via the chuck sleeve 43, the chuck opening/closing sleeve 45, the balancing sleeve 46, the chuck claws 47, and the chuck holder 50. The adjustment nut 51 is configured to be able to adjust its axial position relative to the spindle 101 by being tightened or loosened relative to the spindle 101. It follows that by adjusting the axial position of the adjustment nut 51, the axial position of the chuck holder 50, i.e., the axial position of the chuck claws 47, can be adjusted. This axial position adjustment of the chuck claws 47 (tightening adjustment of the adjustment nut 51) allows for adjustment of the holding force applied to the workpiece W by the collet chuck 41 in the closed state.

Through intensive research, the inventors of the present invention found out that a variation in the amount of tightening (nut angle) of the adjustment nut 51 causes a variation in the difference between the response times of the chuck open position sensor 71 and the chuck close position sensor 72 described above.

The chuck open position sensor 71 outputs an ON signal when the rod 610 is in the contracted position (or passes a predetermined contraction reference position), and outputs an OFF signal when the rod 610 strokes out of the contracted position (or does not reach the contraction reference position). Similarly, the chuck close position sensor 72 outputs an ON signal when the rod 610 is in the extended position (or passes a predetermined extension reference position), and outputs an OFF signal when the rod 610 strokes out of the extended position (or does not reach the extension reference position). Consequently, during a stroke of the rod 610, there is a transition period in which neither the chuck open position sensor 71 nor the chuck close position sensor 72 respond (both output the OFF signal). This transition period varies in length in accordance with the amount of tightening of the adjustment nut 51.

Fig. 6 is a timing chart showing the response time of each of the chuck open position sensor 71 and the chuck close position sensor 72 in response to a chuck close signal issued by the control unit 200 to the actuator 60. When the actuator 60 causes the collet chuck 41 to perform a closing operation from the open state to the closed state, the period from when the control unit 200 has issued a control signal to the actuator 60 to perform the closing operation to when the output of the chuck open position sensor 71 switches from ON to OFF shall be referred to as period A (first time). The period from when the control unit 200 has issued a control signal to the actuator 60 to perform the closing operation to when the output of the chuck close position sensor 72 switches from OFF to ON shall be referred to as period B (second time). The transition period is period B - A (time difference).

The period A, i.e., the period in which the output of the chuck open position sensor 71 switches from ON to OFF, is when no load is applied during the chuck operation, and therefore the sensor detection time is substantially constant regardless of the tightening amount of the adjustment nut 51. On the other hand, the period B, i.e., the period in which the output of the chuck close position sensor 72 switches from OFF to ON, is when load is applied during the chuck operation, and therefore the sensor detection time varies in accordance with the tightening amount of the adjustment nut 51. This leads to a change in the period B - A, i.e., the transition period.

Fig. 7 is a graph showing an example of the changes in the period B - A corresponding to the change in the tightening amount (nut angle) of the adjustment nut 51. As shown in Fig. 7, the period B - A was plotted as 0.068, 0.075, 0.082, 0.088, and 0.102, respectively corresponding to the nut angles 30°, 60°, 90°, 120°, and 150°. The results indicate that the tightening amount of the adjustment nut 51 and the period B - A have a substantially linear relationship.

A common practice for adjusting the holding force involves first determining a reference point for the angle (axial position) of the adjustment nut 51. The holding force is then set to a desired value by adjusting the tightening angle from this reference point. According to a conventional method, the reference point is determined as follows. With the chuck claws 47 not riding on the bobbin 48, the axial position of the adjustment nut 51 is adjusted so that the tip of the actuated portions 473 abuts on the actuating portion 481, and the nut angle at this time is determined as the reference angle. However, setting a consistent reference point in a constant manner is difficult with such a method. On the other hand, the adjustment setting of the adjustment nut 51 (which corresponds to the holding force of the collet chuck 41) based on the time difference in sensor detection times in this embodiment facilitates the determination of the holding force, regardless of the reference point setting.

Fig. 8 is a schematic block diagram illustrating one example of the configuration of the machine tool according to this embodiment.

The control unit 200 has a configuration of a common computer. The control unit 200 includes a CPU (Central Processing Unit) 201, a ROM (Read Only Memory) 202, a RAM (Random Access Memory) 203, and an I/O interface 204. The control unit 200 also includes an input unit 81 and an output unit 82. These units are interconnected with a bus. Various sensors including the chuck open position sensor 71 and the chuck close position sensor 72 are connected to the bus via the I/O interface 204 so that signals from these sensors are input to the control unit 200. Also connected to the bus, via the I/O interface 204, are actuators that drive the spindle unit 100 and the tool head 300, and the actuator 60 for the opening and closing of the collet chuck 41, so that control signals are sent from the control unit 200 to these components.

The CPU 201 controls the machine tool 1 and performs various information processing operations. An operating system (OS) and various programs and tables are stored in the ROM 202 or RAM 203 as storage means. Various constituent parts are controlled through the execution of stored programs. The control unit 200 thus implements the functions that serve predetermined purposes. The control unit 200 may be a single computer, or a plurality of computers coordinated to work together.

The input unit 81 includes means for receiving input operations performed by a user, such as a touchscreen, a mouse, a keyboard, or a microphone. The output unit 82 includes means that present information to the user, such as an LCD (Liquid Crystal Display), an EL (Electroluminescence) panel, a speaker, and a lamp. The input unit 81 and the output unit 82 can be configured as one touchscreen display.

Fig. 9 is a diagram illustrating one example of the functional configuration of the control unit 200. The control unit 200 includes a machining control unit 211, a holding force acquisition unit 212, and a holding force correction unit 213 as functional constituent elements. The machining control unit 211, the holding force acquisition unit 212, and the holding force correction unit 213 are functional constituent elements provided by the CPU 201 of the control unit 200, for example, executing various programs stored in the ROM 202 or RAM 203.

The machining control unit 211 controls the machine tool 1 during the machining of a workpiece W. The machining control unit 211 causes the collet chuck 41 to clamp the workpiece W, rotates the spindle 101, and controls the movement of the cutting tool 301 on the tool head 300, to cut the workpiece W, for example. Any known techniques can be used for controlling the machining of the workpiece W by this machining control unit 211.

The holding force acquisition unit 212 acquires the holding force applied to the workpiece W by the collet chuck 41 in the closed state based on the period B - A as described above. The holding force is acquired on the basis of a correlation between the period B - A described above and the tightening amount of the nut. Namely, there is a linear relationship between the period B - A described above and the tightening amount of the nut (adjustment setting of the adjustment nut 51), and there is a linear relationship between the tightening amount of the nut and the holding force applied to the workpiece W by the collet chuck 41 in the closed state. A holding force corresponding to a tightening amount of the nut can be acquired by calculation using the above-described linear relationship based on multiple actual measurements, which may be obtained experimentally, for example, by detecting discrete values in kilogram force (kgf) as a unit, for example, using a torque sensor on the collet chuck 41. The holding force can be presented to the user as specific values, or as incremental levels of the holding force, with each level representing a preset range of nut tightening settings.

Fig. 10 is a flowchart for creating holding force correlation data by the holding force acquisition unit. Preferably, the holding force correlation data is created during a preparation or setup process prior to machining of actual products. Namely, the workpiece W used in this process can be a spare workpiece W rather than the actual product.

First, the control unit 200 issues a chuck close signal to the actuator 60, to cause the collet chuck 41 to close and hold the workpiece W (S101). Then, the period A and the period B are acquired (S102 and S103). The period A is the period from when the control signal for the closing operation was issued to when the chuck open position sensor 71 detects that the collet chuck 41 is no longer in the open position. The period B is the period from when the control signal for the closing operation was issued to when the chuck close position sensor 72 detects that the collet chuck 41 has assumed the closed state. The control unit 200 stores the acquired periods A and B, and the period B - A obtained from these, in the storage means.

When there has been obtained enough data of periods A and B required for acquiring correlations between the period B - A and the amount of tightening of the nut (holding force) to determine the holding force (S104: YES), the correlation data of the period B - A and the holding force is created (S107). When there is not enough data of periods A and B (S104: NO), data acquisition is repeated. Namely, the collet chuck 41 is opened (S105), the angle of the adjustment nut 51 is changed, to change the position of the chuck claws 47 (S106). The adjustment setting of the adjustment nut 51 may be changed manually by the user, or, when feasible, automatically by the machine. Steps S101 to S106 are repeated until necessary data is collected.

Fig. 11 is a flowchart for detecting the holding force of the chuck using the holding force data obtained by the process of Fig. 10. Holding force detection may be performed during the setting process prior to machining of actual products similarly to the process of Fig. 10, or during the machining of actual products.

The control unit 200 issues a chuck close signal to the actuator 60, to cause the collet chuck 41 to close and hold the workpiece W (S201). The adjustment nut 51 may be preset to an angle with a certain margin in this preparatory step as compared to the angle during the actual machining. Namely, the tightening amount of the adjustment nut 51 here is a provisional setting (first tightening amount) for obtaining an optimal setting (second tightening amount) for an optimal holding force of the collet chuck 41. Then, the period A and the period B are acquired (S202 and S203). The period A is the period from when the control signal for the closing operation was issued to when the chuck open position sensor 71 detects that the collet chuck 41 is no longer in the open position. The period B is the period from when the control signal for the closing operation was issued to when the chuck close position sensor 72 detects that the collet chuck 41 has assumed the closed state. The period B - A obtained from the periods A and B is compared with the correlation between the period and the holding force (holding force data) acquired by the process of Fig. 10, or calculated on the basis of this correlation, to determine a corresponding holding force (S204). The obtained holding force is informed to the user via the output unit 82 as a notification means (S205).

The user notified of the holding force by the steps described above can readjust the adjustment nut 51 to achieve a desired holding force if necessary on the basis of the notified holding force. In the notification to the user at S205, the correlation between the nut adjustment setting and the holding force may also be displayed. Alternatively, in the case where a desired holding force has already been entered via the input unit 81, a necessary adjustment amount of the nut (second tightening amount) for achieving the desired holding force may be determined at S204 and presented to the user at S205.

The holding force correction unit 213 corrects the correlation between the obtained period B - A and the holding force (holding force data). As described above, the period A is basically when no load is applied (when load does not vary largely) during the chuck operation, and therefore the sensor detection time is substantially constant regardless of the tightening amount of the adjustment nut 51. However, after a long period of use, for example, the detection time can vary by the influence of changes in the air supply pressure of the air cylinder 61, and lubrication conditions between the chuck claws 47 and the bobbin 48. For example, if the air supply pressure of the air cylinder 61 has dropped from the standard 0.5 MPa to 0.4 MPa, the time A will be longer, which makes the period B longer, too. Therefore, it is preferable to correct the holding force data to account for such changes in machine behavior over time. Accordingly, in this embodiment, a delay (period C - D) in the sensor detection times when the chuck performs an opening operation caused by changes over time is obtained to determine a time lag (coefficient) to be used for the correction of the delay (period B - A) in the closing operation.

Fig. 12 is a timing chart showing the response time of each of the chuck open position sensor 71 and the chuck close position sensor 72 in response to a chuck open signal issued by the control unit 200 to the actuator 60. When the actuator 60 causes the collet chuck 41 to perform the closing operation from the closed state to the open state, the period from when the control unit 200 has issued a control signal to the actuator 60 to perform the opening operation to when the output of the chuck close position sensor 72 switches from ON to OFF shall be referred to as period C (third time). The period from when the control unit 200 has issued the control signal to the actuator 60 to perform the opening operation to when the output of the chuck open position sensor 71 switches from OFF to ON shall be referred to as period D (fourth time). The transition period is period D - C (time difference).

This transition period D - C may fluctuate due to changes in machine behavior over time as described above. By comparing the period D - C when the machine is new with the period D - C after a certain time of operation (i.e., after wear or degradation has progressed), a coefficient (time lag) for correcting the holding force data can be obtained. Correcting the holding force data using this coefficient will enable determination of a more suitable holding force.

Fig. 13 is a flowchart for correcting the holding force correlation data by the holding force acquisition unit. This process is performed, after the creation of a standard set of holding force correlation data in the initial new state of the machine, every time the number of operations of the machine reaches a predetermined value, to update the holding force correlation data.

First, the control unit 200 issues a chuck open signal to the actuator 60, to cause the collet chuck 41 to open and release the workpiece W (S301). Then, the period C and the period D are acquired (S302 and S303). The period C is the period from when the control signal for the opening operation was issued to when the chuck close position sensor 72 detects that the collet chuck 41 is no longer in the closed position. The period D is the period from when the control signal for the opening operation was issued to when the chuck open position sensor 71 detects that the collet chuck 41 has assumed the open state. The control unit 200 stores the acquired periods C and D, and the period D - C obtained from these, in the storage means.

When there has been obtained enough data of periods C and D required for acquiring correlations between the period D - C and the tightening amount of the nut (holding force) to determine the holding force (S304: YES), the correlation data of the period D - C and the holding force is created (S307). When there is not enough data of periods C and D (S304: NO), data acquisition is repeated. Namely, the angle of the adjustment nut 51 is changed to change the position of the chuck claws 47 (S305), after which the collet chuck 41 is closed (S306), to hold the workpiece W again. The adjustment setting of the adjustment nut 51 may be changed manually by the user, or, when feasible, automatically by the machine. Steps S301 to S306 are repeated until necessary data is collected.

The latest holding force data (C', D') thus obtained by the process described above is compared with the initially obtained standard holding force data (C, D), to determine a time lag (coefficient) and to correct the holding force data corresponding to the period B - C (S308). For example, period B - A in the latest holding force data is corrected using a coefficient C'/C = α (α(B - A)). By using the corrected holding force data, a more appropriate holding force that reflects the changes over time of the machine can be set.

As described above, according to this embodiment, the adjustment setting of the adjustment nut 51 (which corresponds to the holding force of the collet chuck 41) based on the time difference in sensor detection times enables an optimal holding force to be set, regardless of the reference point setting. Namely, the holding force of the chuck is correctly controlled, so that the machining precision can be improved.

According to this embodiment, the holding force of the chuck, which is difficult to obtain (quantify) directly, can be better determined and even quantified using the intrinsic configurations of the machine tool, without requiring any additional configuration.

It should be noted that specific configurations of the spindle unit, the chuck open/close mechanism including the collet chuck, the chuck sleeve, and the chuck claws, the actuators for driving various units, and the open/close sensors shown in the embodiment are only examples. Namely, other conventional or known configurations can be adopted as required.

### [Reference Signs List]

- 1: Machine tool
- 100: Spindle unit
- 101: Spindle
- 102: Headstock
- 103: Drive unit
- 2: Base
- 200: Control unit
- 300: Tool head
- 301: Cutting tool
- 41: Collet chuck
- 43: Chuck sleeve
- 44: Compression coil spring
- 45: Chuck opening/closing sleeve
- 46: Balancing sleeve
- 47: Chuck claw
- 48: Bobbin
- 60: Actuator
- W: Workpiece

## Claims

1. A machine tool comprising:
a spindle including a chuck configured to hold a workpiece;
an open/close mechanism configured to operate the chuck to assume either a closed state in which the chuck holds the workpiece or an open state in which the chuck allows the workpiece to be removed;
sensors configured to detect whether or not the chuck is in the closed state, and whether or not the chuck is in the open state, respectively; and
a control unit configured to control the open/close mechanism;
wherein the machine tool includes an acquisition means configured to acquire a holding force applied to a workpiece by the chuck in the closed state based on a difference between a first time and a second time, the first time being, in a case where the open/close mechanism causes the chuck to perform a closing operation from the open state to the closed state, a time from when the control unit issues a control signal to the open/close mechanism to perform the closing operation to when the sensor detects that the chuck is no longer in the open state, and the second time being a time from when the control unit issues the control signal to the open/close period to when the sensor detects that the chuck has assumed the closed state.

2. The machine tool according to claim 1, further comprising an adjustment mechanism configured to allow for adjustment of a tightening amount applied to the workpiece by the chuck in the closed state; and
a storage means configured to store a correlation between the difference, the tightening amount, and the holding force.

3. The machine tool according to claim 2, further comprising a correction means configured to correct the correlation based on a change with time in a second difference between a third time and a fourth time, the third time being, in a case where the open/close mechanism causes the chuck to perform an opening operation from the closed state to the open state, a time from when the control unit issues a control signal to the open/close mechanism to perform the opening operation to when the sensor detects that the chuck is no longer in the closed state, and the fourth time being a time from when the control unit issues the control signal to the open/close period to when the sensor detects that the chuck has assumed the open state.

4. The machine tool according to claim 1, further comprising a notification means configured to notify information including the holding force to the outside.

5. The machine tool according to claim 2, wherein the open/close mechanism comprises:
a first actuating member provided to the spindle and configured to be able to assume a closed orientation in which the first actuating member actuates the chuck to assume the closed state and an open orientation in which the first actuating member actuates the chuck to assume the open state;
a second actuating member provided to the spindle and configured to be displaceable relative to the first actuating member in a direction of a rotation axis of the spindle, the second actuating member being able to assume a closed position in which the second actuating member actuates the first actuating member to assume the closed orientation and an open position in which the second actuating member actuates the first actuating member to assume the open orientation; and
a driving means including an air cylinder and configured to cause the second actuating member to move between the closed position and the open position.

6. The machine tool according to claim 5, wherein the adjustment mechanism is configured to be able to change the tightening amount of the chuck by changing a position of the first actuating member relative to the spindle in the direction of the rotation axis.

7. The machine tool according to claim 6, wherein the sensor is configured to detect whether or not the driving means is causing the second actuating member to be in the closed position, and whether or not the driving means is causing the second actuating member to be in the open position.

8. A chuck holding force detection method for detecting a holding force applied to a workpiece by a chuck in a spindle of a machine tool in a case where the chuck holds the workpiece, comprising:
a first step in which an open/close mechanism causes the chuck to perform a closing operation, from an open state in which the chuck allows a workpiece to be removed to a closed state in which the chuck holds a workpiece;
a second step in which a first time and a second time are acquired, the first time being a time from when a control unit issues a control signal to the open/close mechanism for the closing operation in the first step to when a sensor detects that the chuck is no longer in the open state, and the second time being a time from when the control unit issues the control signal to the open/close mechanism to when the sensor detects that the chuck has assumed the closed state; and
a third step in which the holding force is obtained on the basis of a correlation between a difference between the first time and the second time, a tightening amount adjusted by an adjustment mechanism applied to the workpiece by the chuck in the closed state, and the holding force.

9. The chuck holding force detection method according to claim 8, further comprising:
a fourth step in which the open/close mechanism causes the chuck to perform an opening operation, from the closed state to the open state;
a fifth step in which a third time and a fourth time are acquired, the third time being a time from when the control unit issues a control signal to the open/close mechanism to perform the opening operation to when the sensor detects that the chuck is no longer in the closed state, and the fourth time being a time from when the control unit issues the control signal to the open/close period to when the sensor detects that the chuck has assumed the open state; and
a sixth step in which the correlation is corrected on the basis of a change over time in a difference between the third time and the fourth time, the change being caused by repeating the fourth step and the fifth step.

10. A method for setting a tightening amount applied to a workpiece by a chuck in a spindle of a machine tool in a case where the chuck holds the workpiece, comprising:
a first step in which, with the chuck in a closed state in which the chuck holds a workpiece, and with a tightening amount applied to the workpiece by the chuck in the closed state being adjusted by an adjustment mechanism to a first tightening amount, an open/close mechanism causes the chuck to perform a closing operation, from an open state in which the chuck allows a workpiece to be removed to the closed state,
a second step in which a first time and a second time are acquired, the first time being a time from when a control unit issues a control signal to the open/close mechanism for the closing operation in the first step to when a sensor detects that the chuck is no longer in the open state, and the second time being a time from when the control unit issues the control signal to the open/close mechanism to when the sensor detects that the chuck has assumed the closed state;
a third step in which a second tightening amount that enables the holding force to be set to a desired value is obtained on the basis of a correlation between a difference between the first time and the second time, a tightening amount adjusted by the adjustment mechanism applied to the workpiece by the chuck in the closed state, and a holding force applied to the workpiece by the chuck in the closed state; and
a fourth step in which the tightening amount is adjusted by the adjustment mechanism to the second tightening amount obtained in the third step.
